# EUROPÄISCHE PATENTANMELDUNG

(11) **EP 1 626 381 A2**
(43) Veröffentlichungstag der Anmeldung: **15.02.2006**
(21) Anmeldenummer: 05016836.8
(22) Anmeldetag: 03.08.2005
(51) Int. Cl.: G08C 19/02, G01D 5/14

(54) **Sensor mit zwei elektrischen Anschlüssen**

(30) Priorität: 14.08.2004 DE 102004039518
(71) Anmelder: WABCO GmbH & CO. OHG, 30432 Hannover (DE)
(72) Erfinder: Kleen, Berend, 30161 Hannover (DE); Lustfeld, Eike, D-31547 Rehburg-Loccum (DE)
(74) Vertreter: Günther, Constantin

(57) **Zusammenfassung**

Die Erfindung betrifft einen Sensor (20) mit zwei elektrischen Anschlüssen (1, 2), wobei der Sensor (20) zumindest ein elektrisches Bauteil (3, 4, 9, 11, 12) enthält, das zum Betrieb eine elektrische Energieversorgung benötigt, wobei die zwei elektrischen Anschlüsse (1, 2) sowohl für die Energieversorgung als auch für die Ausgabe eines Ausgangssignals des Sensors (20) dienen. Hiervon ausgehend wird ein Sensor mit zwei elektrischen Anschlüssen angegeben, bei dem eine Ausgabe des Ausgangssignals des Sensors über zumindest einen der elektrischen Anschlüsse mit möglichst einfachen schaltungstechnischen Mitteln, insbesondere ohne Verwendung einer Stromquelle, möglich ist. Dies wird dadurch erreicht, dass der Sensor (20) eine Ausgangsschaltung (5, 6, 10, 13) enthält, die das Ausgangssignal durch Modulation des Spannungspotentials an wenigstens einem der zwei elektrischen Anschlüsse (1, 2) ausgibt, und wobei der Sensor (20) zur Energieversorgung wenigstens des elektrischen Bauteils (3, 4, 9, 11, 12) eine Spannungsversorgungsschaltung (7, 8, 9) aufweist, die eine Versorgungsspannung aus den an den zwei elektrischen Anschlüssen (1, 2) anliegenden Spannungspotentialen erzeugt.

## Beschreibung

Die Erfindung betrifft einen Sensor mit zwei elektrischen Anschlüssen gemäß dem Oberbegriff des Patentanspruchs 1.

Ein gattungsgemäßer Sensor ist aus der WO 00/70309 A1 bekannt.

Es besteht bei derartigen Sensoren zunehmend der Bedarf, diese nicht nur mit passiven elektrischen Bauteilen zu versehen, sondern auch sogenannte aktive elektrische Bauteile einzusetzen, wobei hiermit elektrische Bauteile gemeint sind, die zum Betrieb eine Versorgung mit elektrischer Energie benötigen. Es ist in der hergebrachten Sensortechnologie weitgehend üblich, einen Sensor mit nur zwei elektrischen Anschlüssen zu versehen, um den Verdrahtungsaufwand in Grenzen zu halten. Bei herkömmlichen, nur mit passiven elektrischen Bauteilen bestückten Sensoren ist es dabei üblich, einen der Anschlüsse für das Ausgangssignal des Sensors und den anderen Anschluss als Masseanschluss zu verwenden. Bei Sensoren mit aktiven elektronischen Bauelementen, die eine elektrische Energieversorgung benötigen, besteht der Wunsch, kompatibel zu früheren Sensoren mit passiven Bauteilen zu bleiben und den Verkabelungsaufwand nicht zu erhöhen, d.h. weiterhin mit zwei elektrischen Anschlüssen auszukommen.

Bei dem gattungsgemäßen Sensor werden daher die zwei elektrischen Anschlüsse zur Übertragung der elektrischen Energie verwendet, wobei das Ausgangssignal des Sensors über die eine Energieversorgungsleitung durch Modulation des Stromflusses abgegeben wird. Hierfür ist in dem Sensor eine steuerbare Stromquelle vorgesehen, welche eine Information über das von Sensor abzugebende Ausgangssignal als Stromsignal in die eine Energieversorgungsleitung einprägt. Sensoren mit derartigen steuerbaren Stromquellen sind relativ aufwendig und teuer herzustellen. Zudem ist eine Signalübertragung mittels eines eingeprägten Stroms nicht in allen Anwendungsfällen für Sensoren wünschenswert, z. B. nicht bei Wegsensoren für Luftfederungssysteme in Fahrzeugen.

Der Erfindung liegt daher die Aufgabe zugrunde, einen Sensor mit zwei elektrischen Anschlüssen anzugeben, bei dem eine Ausgabe des Ausgangssignals des Sensors über zumindest einen der elektrischen Anschlüsse mit möglichst einfachen schaltungstechnischen Mitteln, insbesondere ohne Verwendung einer Stromquelle, möglich ist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung hat den Vorteil, dass durch die Modulation eines Spannungspotentials an wenigstens einem der zwei elektrischen Anschlüsse eine elektrische Schaltung zur Erzeugung des Ausgangssignals einfach und kostengünstig, insbesondere mit wenigen Bauteilen, ausgeführt werden kann. Ein weiterer Vorteil besteht darin, dass auch eine Spannungsversorgungsschaltung zur Versorgung wenigstens eines elektrischen Bauteils, das der Sensor enthält, in einfacher und kostengünstiger Weise ausgeführt werden kann. Vorteilhaft erzeugt die Spannungsversorgungsschaltung die Versorgungsspannung dabei aus den an den zwei elektrischen Anschlüssen anliegenden Spannungspotentialen.

Die Erfindung wird nachfolgend unter Nennung weiterer Vorteile anhand von Ausführungsbeispielen unter Verwendung von Zeichnungen näher erläutert.

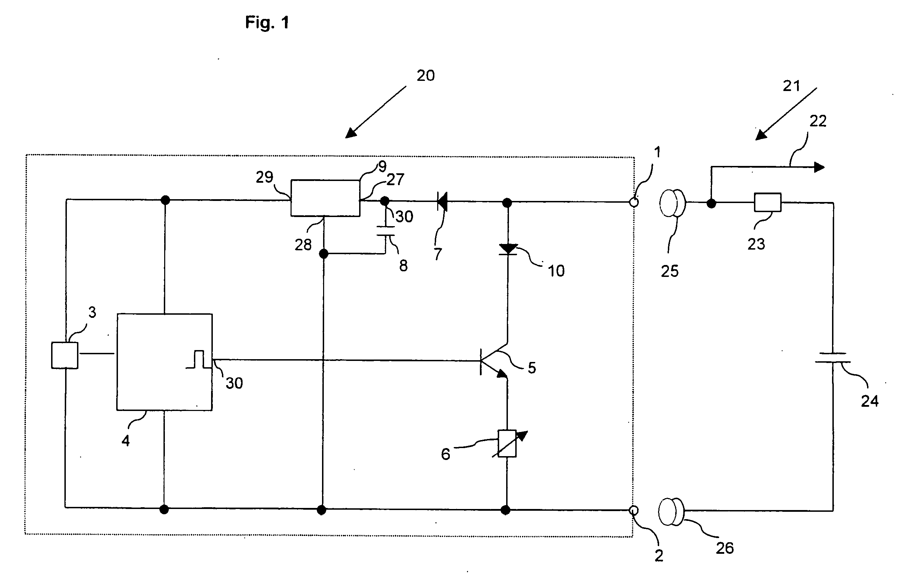

Es zeigen
- Fig. 1 bis 4: verschiedene Ausführungsformen des erfindungsgemäßen Sensors.

In den Figuren werden gleiche Bezugszeichen für einander entsprechende Teile und Signale verwendet.

Als Sensor wird dabei ein Bauteil bezeichnet, dass zumindest eine physikalische Größe quantitativ erfassen kann und ein der Quantität der erfassten Größe entsprechendes Ausgangssignal abgeben kann. Hierfür weist der Sensor mindestens ein Sensierelement auf, das die eigentliche Erfassung der physikalischen Größe vornimmt. Gegebenenfalls weist der Sensor weitere elektrische Bauteile zur Verarbeitung des von dem Sensierelement abgegebenen Signals zu dem Ausgangssignal auf. Der Sensor kann weiterhin ein Gehäuse aufweisen. Bei den erwähnten physikalischen Größen kann es sich beispielsweise elektrische oder magnetische Feldstärken, Temperaturen, Luftfeuchtigkeit oder Drücke handeln. Als Anwendungsbeispiele für magnetische Feldstärken seien induktive Geschwindigkeitssensoren bei Antiblockiersystemen oder induktiv arbeitende Wegsensoren bei Niveauregelungsanlagen für Fahrzeuge genannt.

In der Fig. 1 ist ein Sensor (20) mit zwei elektrischen Anschlüssen (1, 2) dargestellt. Der Sensor (20) enthält als elektrische Bauteile, die zum Betrieb eine elektrische Energieversorgung benötigen, ein Sensierelement (3), einen Mikroprozessor (4) sowie einen Spannungsregler (9). Ein Eingangsanschluss (27) des Spannungsreglers (9) ist über eine Diode (7) mit dem elektrischen Anschluss (1) des Sensors (20) verbunden. Die Diode (7) lässt einen Stromfluss von dem elektrischen Anschluss (1) zu dem Eingangsanschluss (27) zu. Der Spannungsregler (9) ist mit einem Referenzanschluss (28) mit dem elektrischen Anschluss (2) des Sensors (20) verbunden. Des Weiteren ist ein Kondensator (8) vorgesehen, der einerseits an dem elektrischen Anschluss (2) angeschlossen ist, und andererseits an einem gemeinsamen Anschlusspunkt (30) mit der Diode (7) und verbunden ist. Der somit zwischen dem Eingangsanschluss (27) und dem Referenzanschluss (28) vorgesehene Kondensator (8) bewirkt eine Pufferung des zwischen den Anschlüssen (27, 28) des Spannungsreglers (9) anliegenden Spannungspotentials. Hierdurch können insbesondere Schwankungen dieses Spannungspotentials weitgehend kompensiert werden. An einem Ausgangsanschluss (29) des Spannungsreglers (9) wird eine zeitlich weitgehend stabile Ausgangsspannung ausgegeben. Diese wird über elektrische Leitungen den Spannungsversorgungsanschlüssen des Sensierelements (3) und des Mikroprozessors (4) zugeführt. Das Sensierelement (3) sowie der Mikroprozessor (4) sind masseseitig über elektrische Leitungen mit dem elektrischen Anschluss (2) des Sensors (20) verbunden. Somit dient der gemeinsame Anschlusspunkt (30) zur Spannungsversorgung des Spannungsreglers (9) und über diesen zur Spannungsversorgung des Sensierelements (3) und des Mikroprozessors (4).

Der Mikroprozessor (4) wertet das von dem Sensierelement (3) empfangene Signal aus und gibt seinerseits ein Signal über einen Anschluss (30) an eine Ausgangsschaltung ab, die in der Ausführungsform gemäß Fig. 1 aus einem Transistor (5), einem einstellbaren Widerstand (6) sowie einer Verpolschutzdiode (10) besteht. Für die Ausführung der Ausgangsschaltung sind eine Reihe von Alternativen denkbar. So kann z. B. statt des in Fig. 1 dargestellten Bipolartransistors ein Feldeffekttransistor verwendet werden, oder jedes andere, eine vergleichbare Funktion aufweisende elektrische Bauelement.

Gemäß Fig. 1 erzeugt der Transistor (5) über die Verpolschutzdiode (10) an dem elektrischen Anschluss (1) ein moduliertes Spannungspotential gemäß dem von dem Anschluss (30) des Mikroprozessors (4) abgegebenen Signals. Die Amplitude dieses Signals kann je nach Bedarf über den Widerstand (6) eingestellt werden. Die Diode (10) dient dabei zur Vermeidung von Beschädigungen von Bauteilen des Sensors (20), wenn versehentlich die elektrischen Anschlüsse (1, 2) mit einer elektrischen Energiequelle in verkehrter Polarität verbunden werden.

Das von dem Mikroprozessor (4) über den Anschluss (30) abgegebene Signal kann z.B. als pulsbreitenmoduliertes Signal oder als serielles Datensignal ausgebildet sein. Im letzteren Fall ist der Anschluss 30 vorteilhaft als serieller Datenanschluss ausgebildet. Sofern ein pulsbreitenmoduliertes Signal verwendet wird, können mit diesem Signal vorteilhaft mehrere Informationen übertragen werden, z.B. durch Variation von Frequenz und Phasenlage oder durch Variation der Längen der Pulse und der Pulspausen. Auf diese Weise kann neben dem auf dem Signal des Sensierelements (3) basierenden Ausgangssignal noch eine weitere Information ausgegeben werden, z.B. eine Fehler- oder Status-Information über bestimmte Betriebszustände des Sensors (20).

Gemäß einer vorteilhaften Weiterbildung der Erfindung beinhaltet das Ausgangssignal des Sensors (20) eine Information über den Betriebszustand des Sensors (20) und/oder aufgetretene Fehler beim Betrieb des Sensors (20).

Die elektrischen Anschlüsse (1, 2) des Sensors (20) dienen zum Anschluss an ein das Ausgangssignal des Sensors (20) auswertendes elektrisches Gerät, welches zusätzlich die elektrische Energieversorgung für den Sensor bereitstellt. Von diesem elektrischen Gerät ist in der Fig. 1 ausschnittsweise ein Teil (21) dargestellt, bestehend aus elektrischen Anschlüssen (25, 26) als Gegenstück zu den elektrischen Anschlüssen (1, 2) des Sensors (20), an die eine Reihenschaltung aus einem Widerstand (23) sowie einer elektrischen Energiequelle (24) angeschlossen ist. Des Weiteren wird über eine elektrische Leitung (22) das Ausgangssignal des Sensors (20) zwischen dem elektrischen Anschluss (25) und dem Widerstand (23) abgegriffen und einer nicht näher dargestellten Auswerteschaltung zugeführt.

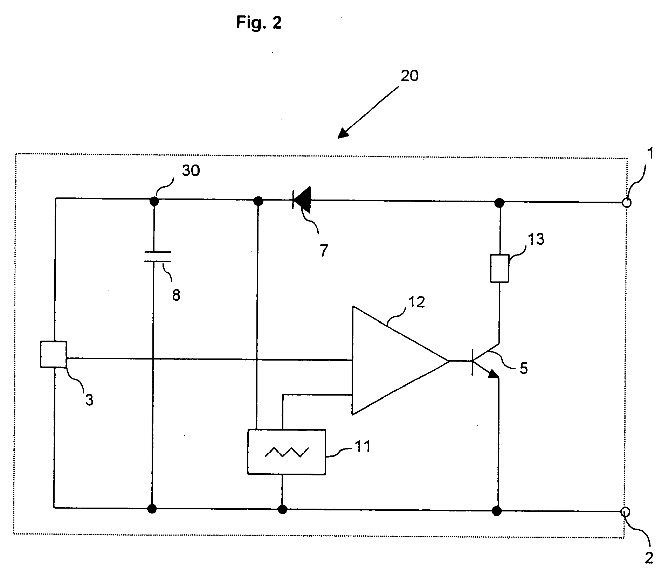

In einer weiteren Ausführungsform gemäß Fig. 2 weist der Sensor (20) nicht den zuvor erläuterten Spannungsregler (9) auf. Eine Pufferung von Spannungsschwankungen erfolgt in dieser Ausführungsform allein durch einen Kondensator (8) mit geeigneter Dimensionierung. Statt des Mikroprozessors (4) ist in der Ausführungsform gemäß Fig. 2 für die Verarbeitung des von dem Sensierelement (3) abgegebenen Signals ein Komparator (12) vorgesehen, dessen einem Komparatoreingang das Signal des Sensierelements (3) zugeführt wird. Dem anderen Komparatoreingang wird das Ausgangssignal eines Sägezahngenerators (11) zugeführt. Der Sägezahngenerator (11) ist zudem zur elektrischen Energieversorgung mit dem elektrischen Anschluss (2) sowie über die Diode (7) mit dem elektrischen Anschluss (1) des Sensors (20) verbunden. Über die Schaltungsanordnung des Sägezahngenerators (11) und des Komparators (12) wird das Signal des Sensierelements (3) in einen pulsbreitenmoduliertes Rechtecksignal umgewandelt, das vom Ausgang des Komparators (12) an den Transistor (5) abgegeben wird.

Der gemäß Fig. 1 bereits erwähnte Widerstand (6), welcher dort in dem mit dem elektrischen Anschluss (2) verbundenen Schaltungszweig angeordnet war, ist in der Ausführungsform gemäß Fig. 2 in alternativer Weise als Widerstand (13) in dem mit dem elektrischen Anschluss (1) verbundenen Schaltungszweig angeordnet. Die Verpolschutzdiode ist in der Ausführungsform gemäß Fig. 2 nicht vorgesehen. Eine Sicherheit gegen verkehrte Polarität wird gemäß einer vorteilhaften Ausgestaltung durch eine mechanische Codierung eines elektrischen Steckverbinders, welcher die elektrischen Anschlüsse (1, 2) enthält, erreicht.

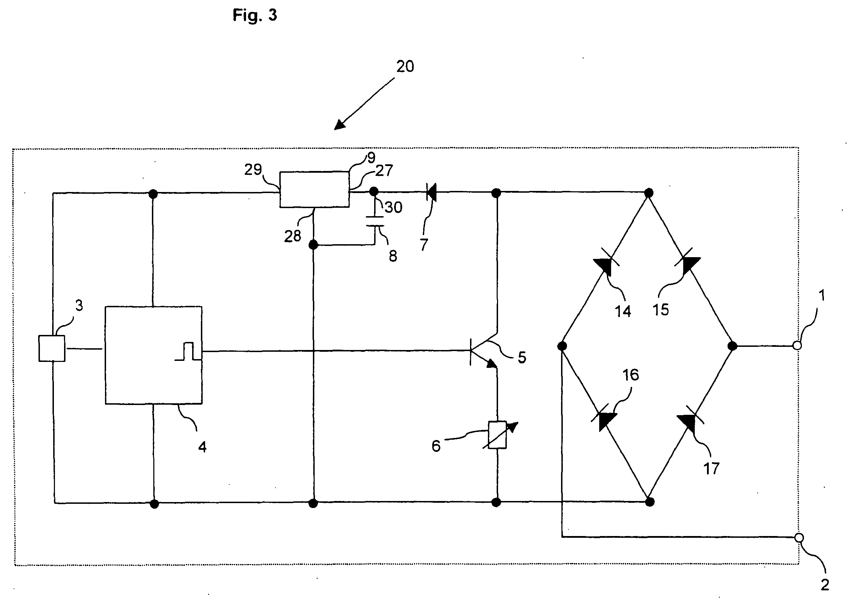

In der Ausführungsform gemäß Fig. 3 weist der Sensor (20) die bereits gemäß Fig. 1 erläuterten Bauteile auf, jedoch ohne die Verpolschutzdiode (10). Zusätzlich gegenüber Fig. 1 ist eine nach Art eines Brückengleichrichters ausgebildete Polaritätszuordnungsschaltung (14, 15, 16, 17) vorgesehen, die aus vier Dioden (14, 15, 16, 17) besteht. Die Polaritätszuordnungsschaltung ist mit zwei gegenüberliegenden Punkten der Brückenschaltung mit den elektrischen Anschlüssen (1, 2) verbunden. Die weiteren gegenüberliegenden Punkte der Brückenschaltung sind mit der gemäß Fig. 1 bereits erläuterten Schaltungsanordnung verbunden. Die Polaritätszuordnungsschaltung bewirkt, dass die elektrischen Anschlüsse (1, 2) mit beliebiger Polarität an ein Gerät (21) angeschlossen werden können.

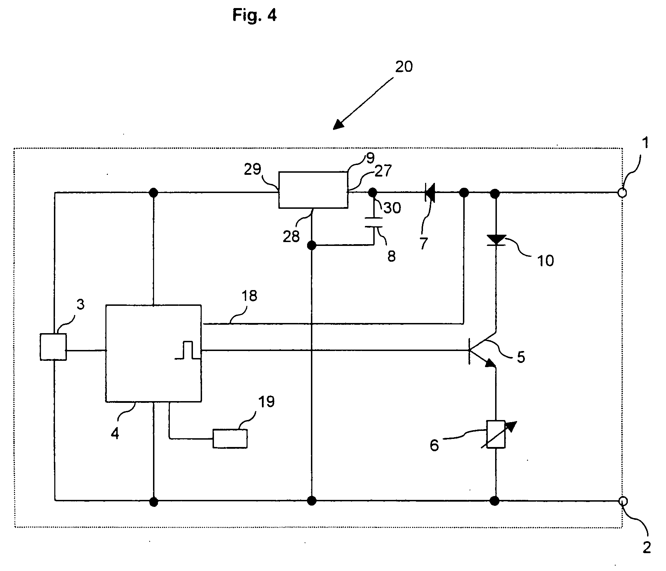

Die Ausführungsform des Sensors (20) gemäß Fig. 4 unterscheidet sich von der Ausführungsform gemäß Fig. 1 durch eine weitere elektrische Leitung (18), über die ein Eingangsanschluss des Mikroprozessors (4) direkt mit dem elektrischen Anschluss (1) des Sensors (20) verbunden ist. Der mit der Leitung (18) verbundene Eingangsanschluss des Mikroprozessors (4) kann vorteilhaft als serieller Schnittstellenanschluss ausgestaltet sein. Des Weiteren ist der Mikroprozessor (4) mit einem Datenspeicher (19) verbunden, dessen elektrische Verbindungen zur Energieversorgung zur Vereinfachung in der Fig. 4 nicht dargestellt sind. In einer vorteilhaften Ausgestaltung der Erfindung ist der Sensor dabei zum Empfang von Daten über die zwei elektrischen Anschlüsse (1, 2) ausgebildet. Dies kann etwa dadurch geschehen, dass ein an die elektrischen Anschlüsse (1, 2) angeschlossenes Gerät (21) ein serielles Datensignal über den elektrischen Anschluss (1) und folglich über die elektrische Leitung (18) zu dem Mikroprozessor (4) überträgt. Der Mikroprozessor (4) wertet die empfangenen Daten aus und speichert diese bei Bedarf in dem Datenspeicher (19). Eine Auslegung des Datenspeichers (19) als nicht flüchtiger Speicher hat den Vorteil, dass einmal darin gespeicherte Daten auch nach einem Trennen des Sensors (20) von der elektrischen Energieversorgung erhalten bleiben. Die über die Leitung (18) übertragenden Daten können beispielsweise für eine Programmierung bzw. eine Kalibrierung des Sensors verwendet werden. So kann dem Sensor über die übermittelten Daten beispielsweise ein zu verwendender Messbereich oder eine bestimmte Auflösung der auszugebenden Daten zugeordnet werden.

## Patentansprüche

1. Sensor (20) mit zwei elektrischen Anschlüssen (1, 2), wobei der Sensor (20) zumindest ein elektrisches Bauteil (3, 4, 9, 11, 12) enthält, das zum Betrieb eine elektrische Energieversorgung benötigt, wobei die zwei elektrischen Anschlüsse (1, 2) sowohl für die Energieversorgung als auch für die Ausgabe eines Ausgangssignals des Sensors (20) dienen, **dadurch gekennzeichnet, dass** der Sensor (20) eine Ausgangsschaltung (5, 6, 10, 13) enthält, die das Ausgangssignal durch Modulation des Spannungspotentials an wenigstens einem der zwei elektrischen Anschlüsse (1, 2) ausgibt, und wobei der Sensor (20) zur Energieversorgung wenigstens des elektrischen Bauteils (3, 4, 9, 11, 12) eine Spannungsversorgungsschaltung (7, 8, 9) aufweist, die eine Versorgungsspannung aus den an den zwei elektrischen Anschlüssen (1, 2) anliegenden Spannungspotentialen erzeugt.

2. Sensor nach Anspruch 1, **dadurch gekennzeichnet, dass** die Spannungsversorgungsschaltung (7, 8, 9) wenigstens eine Diode (7), die an einem der zwei elektrischen Anschlüsse (1, 2) angeschlossen ist, und einen Kondensator (8), der an dem anderen der zwei elektrischen Anschlüsse (1, 2) angeschlossen ist, aufweist, wobei die Diode (7) und der Kondensator (8) an einem gemeinsamen Anschlusspunkt (30) miteinander verbunden sind, wobei der gemeinsame Anschlusspunkt (30) zur Spannungsversorgung wenigstens des elektrischen Bauteils (3, 4, 9, 11, 12) dient.

3. Sensor nach wenigstens einem der vorhergehenden Ansprüche, **dadurch gekennzeichnet, dass** die Spannungsversorgungsschaltung (7, 8, 9) einen Spannungsregler (9) aufweist.

4. Sensor nach wenigstens einem der vorhergehenden Ansprüche, **dadurch gekennzeichnet, dass** die Ausgangsschaltung (5, 6, 10, 13) einen Transistor (5) aufweist, der direkt oder über weitere elektrische Bauelemente (6, 10, 13, 14, 15, 16, 17) mit den zwei elektrischen Anschlüssen (1, 2) verbunden ist.

5. Sensor nach Anspruch 4, **dadurch gekennzeichnet, dass** die weiteren elektrischen Bauelemente (6, 10, 13, 14, 15, 16, 17) einen Widerstand (6, 13) enthalten.

6. Sensor nach Anspruch 4 oder 5, **dadurch gekennzeichnet, dass** die weiteren elektrischen Bauelemente (6, 10, 13, 14, 15, 16, 17) eine Verpolschutz-Diode (10) enthalten.

7. Sensor nach wenigstens einem der vorhergehenden Ansprüche, **dadurch gekennzeichnet, dass** zwischen den zwei elektrischen Anschlüssen (1, 2) und den übrigen im Sensor (20) enthaltenen elektrischen Teilen (3, 4, 5, 6, 7, 8, 9, 10, 11, 12, 13, 18, 19) eine Polaritätszuordnungsschaltung (14, 15, 16, 17) vorgesehen ist, welche den Sensor (20) unverpolbar macht.

8. Sensor nach wenigstens einem der vorhergehenden Ansprüche, **dadurch gekennzeichnet, dass** das elektrische Bauteil (3, 4, 9, 11, 12) einen Mikroprozessor (4) aufweist ist.

9. Sensor nach wenigsten einem der vorhergehenden Ansprüche, **dadurch gekennzeichnet, dass** der Sensor (20) als Ausgangssignal ein pulsbreitenmoduliertes Signal oder ein serielles Datensignal ausgibt.

10. Sensor nach wenigstens einem der vorhergehenden Ansprüche, **dadurch gekennzeichnet, dass** das Ausgangssignal des Sensors (20) eine Information über den Betriebszustand des Sensors (20) und/oder aufgetretene Fehler beim Betrieb des Sensors (20) beinhaltet.

11. Sensor nach wenigstens einem der vorhergehenden Ansprüche, **dadurch gekennzeichnet, dass** der Sensor (20) zum Empfang von Daten über die zwei elektrischen Anschlüsse (1, 2) ausgebildet ist.

12. Sensor nach Anspruch 11, **dadurch gekennzeichnet, dass** ein Datenspeicher (19) zum Speichern der über die beiden elektrischen Anschlüsse (1, 2) empfangenden Daten in dem Sensor (20) vorgesehen ist.
